# EUROPÄISCHE PATENTANMELDUNG

(11) **EP 0 559 948 A2**
(43) Veröffentlichungstag der Anmeldung: **15.09.1993**
(21) Anmeldenummer: 92110335.4
(22) Anmeldetag: 19.06.1992
(51) Int. Cl.: H04M 1/00

(54) **Anordnung zur Anschaltung von Zusatzgeräten an ein Telefon**

(30) Priorität: 07.03.1992 DE 4207291
(71) Anmelder: Bundesrepublik Deutschland, vertr. durch Vorstand der D. Bundespost TELEKOM, vertr. durch Präs. des Fernmeldetechn. Z.amtes, D-64276 Darmstadt (DE)
(72) Erfinder: Holderried, Harry, W-6109 Mühltal (DE); Görmann, Heinz Günter, W-6101 Rossdorf (DE); Simon, Werner, W-6100 Darmstadt (DE)

(57) **Zusammenfassung**

2.1 Der Erfindung liegt die Aufgabe zugrunde, eine Anordnung zu entwickeln, die eine Ankopplung von Zusatzgeräten an Telefone ermöglicht, die nicht mit genormter Schnittstelle und Anschlußbuchse ausgerüstet sind.

2.2 Mittels eines Kopplers wird das ankommende Sprachsignal hochohmig ausgekoppelt und durch einen nachgeordneten regelbaren Verstärker auf einen definierten Wert verstärkt. Das so erhaltene Sprachsignal wird über eine dem Verstärker nachgeordnete Buchse für die Anschaltung von Zusatzgeräten bereitgestellt.

2.3 Die erfindungsgemäße Lösung eignet sich für die Anschaltung von Zusatzgeräten, wie Hörgeräten, Hilfsgeräten für Hörbehinderte, Mithöreinrichtungen und anderen weiterverarbeitenden Audiogeräten an ein Telefon.

## Beschreibung

Die Erfindung betrifft eine Anordnung zur Anschaltung von Zusatzgeräten, wie Hörgeräten, Hilfsgeräten für Hörbehinderte, Mithöreinrichtungen und anderen weiterverarbeitenden Audiogeräten an ein Telefon. Die Anordnung stellt eine definierte Schnittstelle zur Ankopplung der o. a. Geräte dar.

Bei bekannten Lösungen wurde in der Regel eine Kopplung von Telefon und Zusatzgerät durch eine Induktionsspule im Telefonhörer hergestellt. Voraussetzung für den Einsatz von Induktionsspulen im Telefonhörer ist, daß die notwendige Energie für das Betreiben der Induktionsspule durch die Sprechschaltung im Telefon bereitgestellt wird. Durch eine genormte Schnittstelle zur Mikrofon- und Hörkapsel im Telefonhörer war es bisher kein Problem, eine ebenfalls genormte Hörkapsel mit integrierter Induktionsspule einzusetzen.

Für den direkten (galvanischen) Anschluß von Zusatzgeräten wurde bisher eine genormte Schnittstelle für Zusatzgeräte der Gruppe C benutzt. Diese Schnittstelle war serienmäßig in fast allen Telefonen der Baureihe 6 und 7 der Deutschen Bundespost vorhanden. Eine Beschreibung dieses Anschlusses ist in der Zulassungsrichtlinie 1 TR 2 "Technische Forderungen und Endeinrichtungen zur Anschaltung an Anschlüsse mit analogen Anschaltepunkten"/Herausgeber: BMPT, enthalten.

Bei Telefonen, die heute von der Deutschen Bundespost Telekom und anderen Firmen vertrieben werden, sind die oben beschriebene genormte Schnittstelle und die Buchse zum Anschluß von Zusatzgeräten der Gruppe C nicht mehr vorhanden. Das bedeutet, daß es für die Ankopplung oder Anschaltung von Zusatzgeräten keine übergreifende Standardlösung mehr gibt. Die Entwicklung von speziellen Telefonen, die die oben beschriebenen besonderen Anforderungen erfüllen, schränken die Auswahlmöglichkeiten der Kunden bezogen auf das gesamte Angebot erheblich ein.

Der Erfindung liegt die Aufgabe zugrunde, eine Anordnung zu entwickeln, die eine Ankopplung von Zusatzgeräten an Telefone ermöglicht, die nicht mit der beschriebenen genormten Schnittstelle und der Anschlußbuchse der Gruppe C ausgerüstet sind.

Die Aufgabe wird erfindungsgemäß durch eine Anordnung gelöst, bei der das ankommende Sprachsignal vom Telefon zur Hörkapsel hochohmig ausgekoppelt und mittels eines nachgeordneten regelbaren Verstärkers auf einen definierten Wert verstärkt wird. Das so verstärkte Sprachsignal wird mittels einer dem Verstärker nachgeschalteten Buchse für die Anschaltung von Zusatzgeräten bereitgestellt. Die Versorgungsspannung der Anordnung wird durch eine an den Verstärker angeschalteten Stromquelle erzeugt, die durch automatische Signaldetektion in Abhängigkeit vom Vorhandensein des ankommenden Sprachsignals zur Hörerkapsel aktiviert wird.

Die erfindungsgemäße Lösung wird anhand eines Ausführungsbeispiels näher erläutert. Dabei zeigen:
- Figur 1: die prinzipielle Anordnung und
- Figur 2: ein Ausführungsbeispiel anhand eines Blockschaltbildes.

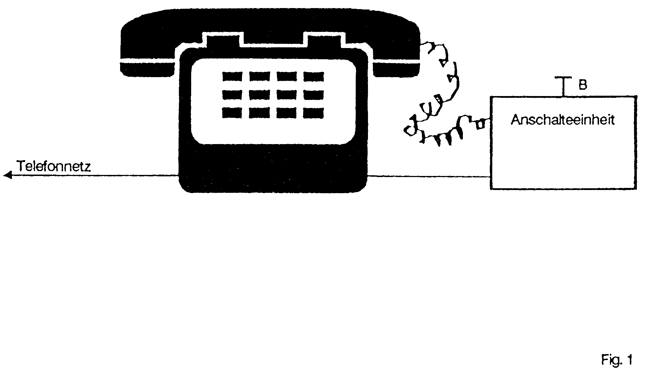

In Figur 1 ist die prinzipielle Anordnung dargestellt. Die Anordnung ist hierbei als eine Anschalteinheit zum Telefon dargestellt, die in die Hörerschnur des Telefons eingefügt ist. Diese Anschalteinheit kann als externe Anschalteinheit ausgebildet sein. Eine weitere Möglichkeit besteht darin, die Anschalteinheit so auszubilden, daß sie mit dem Telefon oder mit dem Telefonhörer durch eine geeignete Vorrichtung lösbar verbunden wird.

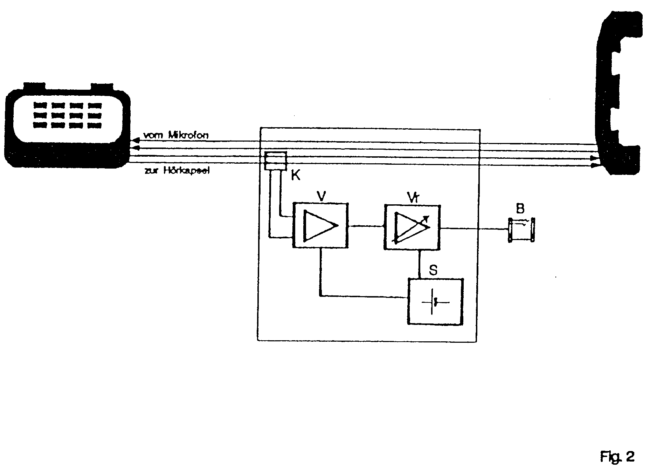

In Figur 2 ist ein Ausführungsbeispiel anhand eines Blockschaltbildes der erfindungsgemäßen Anordnung dargestellt. Die erfindungsgemäße Anordnung ist als externe Anschalteinheit ausgeführt. Die Hörerschnur des Telefonhörers ist hierbei über Westernstecker mit dem Eingang der Anschalteeinheit verbunden. Der Ausgang der Anschalteeinheit ist ebenfalls über Westernstecker mit dem Telefon verbunden. Innerhalb der Anschalteinheit wird mittels eines Kopplers K das ankommende Sprachsignal zur Hörkapsel hochohmig ausgekoppelt. Über einen mit dem Koppler K verbundenen Verstärker V mit nachgeordneter Reglerstufe Vr wird das ankommende Sprachsignal auf einen definierten Wert verstärkt. Das so erhaltene Ausgangssignal wird über eine an den Verstärkerausgang angeschaltete Buchse B, vorzugsweise eine 3,5 mm Stereoklinkenbuchse (Kanäle signalmäßig kurzgeschlossen), für die Anschaltung von Zusatzgeräten bereitgestellt. Durch das Einschleifen der erfindungsgemäßen Anordnung in die Hörerschnur wird aus übertragungstechnischer Sicht der Mikrofonkreis nicht und der Hörkapselkreis in unbedeutender Weise (< 1dB) beeinflußt. Das bedeutet keine Änderungen bezüglich der für die Zulassung des Telefons relevanten übertragungstechnischen Eigenschaften. Die Versorgungsspannung der Anordnung und damit der Anschalteinheit erfolgt mittels einer zusätzlichen Stromquelle S, die mit dem Ver stärker V verbunden ist. Die Stromquelle S wird durch automatische Signaldetektion des ankommenden Sprachsignals zur Hörkapsel ein- und ausgeschaltet. Die Stromquelle S kann auch als Wechselspannungssteckernetzgerät ausgeführt sein. Eine weitere denkbare Ausgestaltung der erfindungsgemäßen Anordnung besteht darin, daß alternativ zum ankommenden Sprachsignal zur Hörkapsel auch noch ein anderes Audiosignal, z. B. von einem Mikrofon, über eine zusätzliche Eingangsbuchse an die erfindungsgemäße Anordnung angeschaltet werden kann.

## Patentansprüche

1. Anordnung zur Anschaltung von Zusatzgeräten an ein Telefon, **dadurch gekennzeichnet**, daß die Hörerschnur des Telefonhörers über eine Steckereinheit mit dem Eingang der Anordnung und über eine weitere Steckereinheit, die am Ausgang der Anordnung liegt, mit dem Telefon verbunden ist, daß mittels eines Kopplers (K) das ankommende Sprachsignal zur Hörkapsel hochohmig ausgekoppelt wird, daß das so ausgekoppelte Sprachsignal dem mit dem Koppler (K) verbundenen Verstärker (V) mit Reglerstufe (Vr) zugeführt und auf einen definierten Wert verstärkt wird, daß das so erhaltene Ausgangssignal an eine mit dem Verstärkerausgang verbundene Buchse (B), die der Anschaltung von Zusatzgeräten dient, angelegt wird, und daß eine zusätzliche Stromquelle (S), die durch automatische Signaldetektion des ankommenden Sprachsignals zur Hörkapsel ein- und ausgeschaltet wird, mit dem Verstärker (V) und der Reglerstufe (Vr) verbunden ist.

2. Anordnung nach Anspruch 1, dadurch gekennzeichnet, daß als Steckereinheit Westernbuchsen und Westernstecker verwendet werden.

3. Anordnung nach Anspruch 1, dadurch gekennzeichnet, das als Buchse (B) zur Anschaltung der Zusatzgeräte eine 3,5 mm Stereoklinkenbuchse eingesetzt ist.

4. Anordnung nach Anspruch 1, dadurch gekennzeichnet, daß über eine zusätzliche Eingangsbuchse, die ebenfalls mit dem Verstärkereingang des Verstärkers (V) verbunden ist, alternativ zum ankommenden Sprachsignal, ein anderes Audiosignal angeschaltet, verstärkt und an die mit dem Verstärkerausgang verbundene Buchse (B) angelegt wird.

5. Anordnung nach Anspruch 1, dadurch gekennzeichnet, daß als Stromquelle (S) ein Wechselspannungssteckernetzgerät angeschaltet ist.
